# EUROPÄISCHE PATENTSCHRIFT

(11) **EP 1 253 002 B1**
(45) Veröffentlichungstag und Bekanntmachung des Hinweises auf die Patenterteilung: **13.03.2013**
(21) Anmeldenummer: 02007414.2
(22) Anmeldetag: 28.03.2002
(51) Int. Cl.: B29C 67/00, B29C 33/68, B29C 37/00

(54) **Vorrichtung und Verfahren für die zerstörungsfreie Trennung ausgehärteter Materialschichten von einer planen Bauebene**
Device and process for the non-destructive release of a product made of hardened layers from a plate platform
Dispositif et procédé pour la séparation non-destructrive d'un produit constitué de couches durcies d'un plan de travail

(30) Priorität: 23.04.2001 DE 10119817
(43) Veröffentlichungstag der Anmeldung: 30.10.2002
(60) Teilanmeldung: 04008054.1
(73) Patentinhaber: Envisiontec GmbH, 45768 Marl (DE)
(72) Erfinder: John, Hendrik, 46569 Hünxe (DE)
(74) Vertreter: Hofer, Dorothea

(56) Entgegenhaltungen:
- JP-A- 6 246 838
- US-A- 5 391 072
- US-A- 5 447 822
- US-A- 5 529 473

## Beschreibung

Die Erfindung betrifft eine Vorrichtung und ein Verfahren Verfahren für die zerstörungsfreie Trennung ausgehärteter Materialschichten von einer planen Bauebene.

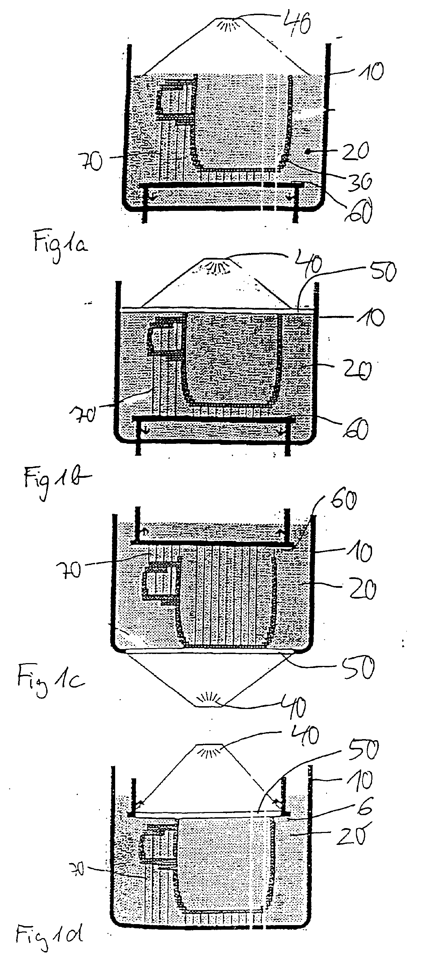

Für den schichtweisen Aufbau dreidimensionaler Objekte aus "lichthärtenden" Photopolymeren werden in der Literatur unterschiedlichste Verfahren angegeben, siehe hierzu "Automated Fabrication - Improving Productivity in Manufacturing" von Marshall Burns, 1993 (ISBN 0-13-119462-3).
Unter die beschriebenen Verfahren fallen drei Varianten, bei der die zu erzeugende Schicht an einer transparenten Referenzebene, ein sogenanntes "Contact Window" (Kontakt-Fenster), durch diese hindurch selektiv belichtet wird und polymerisiert/aushärtet. Die drei Varianten sind in Abb. 1a bis c skizziert. In den Figuren bezeichnet 10 einen Behälter, 20 ein in dem Behälter befindliches flüssiges polymerisierbares Material, 30 ein zu bildendes Objekt, 40 eine Lichtquelle mit einer Maskenererzeugungseinrichtung zur Abbildung eines Querschnittsbildes, 50 das Kontaktfenster, 60 eine Trägerplattform für das Objekt und 70 Stützen für das Objekt.

Das hier im folgenden beschriebene Verfahren ist eine Weiterentwicklung des in der Gebrauchsmusterschrift DE G 93 19 405.6 "Vorrichtung zur Herstellung eines dreidimensionalen Objekts (Modells) nach dem Prinzip der Photoverfestigung" beschriebenen Verfahrens.
Um die ausgehärtete Masterialschicht von dem Kontaktfenster / der Referenzebene trennen zu können, wird in den Patentschriften US 5,171,490 (Efrem V. Fudim) und DE 41 25 534 A1 (EOS GmbH, Electro Optical Systems) eine Lösung für eine Trennschicht mit Hilfe einer dünnen Folie aus flexiblem Kunsstoff beschrieben.

Bei der selektiven Belichtung durch Laser oder Maske in unterschiedlich geformten Flächenstrukturen direkt an einer, der Strahlungsquelle gegenüberliegenden Seite einer transparenten Referenzebene, polymerisiert das Harz in direktem Kontakt mit dieser Referenzebene aus. Die Problematik besteht darin, die in Ihrer Flächenstruktur unterschiedlich ausgebildete Schicht so von der transparenten Referenzebene zu trennen, dass sie an den vorher erzeugten Schichten haften bleibt und durch die Trennkraft sowohl die entstandene Schicht als auch der bereits erzeugte Teil des Objektes nicht verformt oder gar zerstört bzw. abgerissen wird und letztendlich das Schicht für Schicht entstehende Objekt über den gesamten Bauprozeß an der Trägerplatte haften bleibt.

Die US-A-5 447 822 offenbart eine Vorrichtung gemäß dem Oberbegriff des Anspruchs 1 und ein Verfahren gemäß dem Oberbegriff des Anspruchs 6.

Durch den in den oben beschriebenen Patenten vorgeschlagenen Einsatz einer Trennfolie, wird sich der sogenannte Schäleffekt zunutze gemacht, dass heißt die Folie schält sich durch den Trennvorgang regelrecht von der ausgehärteten Polymerschicht ab, wodurch die Trennkräfte in Z-Richtung aufgrund einer Kräftevektorenzerlegung verringert werden.
Dient die Folie als Trennschicht zur transparenten Referenzebene und wird nur das zu bauende Objekt zwecks Trennung von der Referenzebene wegbewegt, ist der Trennweg deutlich größer als die eigentlich zu bauende, folgende Schichtdicke, da durch die während des Trennvorgangs aufgebaute elastische Spannung in der Folie die notwendige Trennkraft für den eigentlichen Schälvorgang aufgebaut werden muss. Dieser Verfahr- bzw. Trennprozess kostet zusätzlich Zeit, die jeweils zur Polymerisationszeit einer Bauschicht hinzugerechnet werden muß und so wesentlich die Gesamtbauzeit des Bauprozesses bestimmt. Ausserdem besteht die Gefahr, dass sich die Folie auf Dauer plastisch verformt, "Falten/Wellen schlägt" und so keine ebene Fläche mehr bildet.Hier ist in Abhängigkeit von der Fläche der an der transparenten Referenzebene auspolymerisierten Schicht eine Adhäsionskraft zwischen Objekt bzw. ausgehärteter Schicht und transparenter Referenzebene zu überwinden. Da es sich i.d.R. um ungleichmäßige Flächenstrukturen handelt, sind die angreifenden Adhäsionskräfte ebenfalls ungleichmäßig verteilt.

Die US-A-5,447,822 beschreibt das direkte Aufbringen einer glatten "Antihaft"-Schicht auf die Referenzebene in Form eines dünnen Films z.B. aus Epoxy, MYLAR oder TEFLON, einer inerten Flüssigkeit, oder eines sehr dünnen Überzugs.

JP 6 246 838 A offenbart eine Trennvorrichtung, in welcher ein Abschäl- bzw. Trennvorgang einer ausgehärteten Schicht durch Zuführen und Abführen von Fluid zwischen einer elastischen, transparenten Folie und einem lichtdurchlässigen Fenster in Kraft gesetzt wird.

Aufgabe der Erfindung ist es, eine Lösung für eine Trennschicht und/oder ein Trennverfahren zu schaffen, die/das unabhängig von
a) der ausgehärteten Flächengröße,
b) der Ausbildung der Flächenstruktur der ausgehärteten Schicht,
c) dem verwendeten aushärtenden Material
eine leichte Trennung der ausgehärteten Schicht von der transparenten Referenzebene ermöglicht, so dass die aktuell ausgehärtete Schicht in Verbindung mit dem bereits erzeugten Schichtaufbau in ihrer ürsprünglichen Form erhalten bleibt, der nötige Verfahrweg zur Trennung minimiert und so die Bauzeit pro Schicht reduziert wird und der Prozeß dabei langzeitstabil ist.

Diese Aufgabe wird durch ein Verfahren bzw. eine Vorrichtung bzw. mit den Merkmalen nach Anspruch 1 bzw. 6 gelöst. Weiterbildungen sind in den Unteransprüchen angegeben.

Weitere Merkmale und Zweckmäßigkeiten ergeben sich aus der Beschreibung von Ausführungsbeispielen anhand der Figuren. Von den Figuren zeigen:
Fig. 1: den Stand der Technik;
Fig. 2: eine transparente Bodenplatte 2 mit darauf vorgesehener Trennschicht 1, flüssigem Photopolymer 3 und dem Objekt 5;
Fig 3a: nur zur Erläuterung der Erfindung eine Anordnung nach Fig. 2, wobei die Trennschicht 1 als transparente Folie ausgebildet ist, die zwischen der Bodenplatte und dem Photopolymer angeordnet ist;
Fig 3b bis 3c: auf der Basis von Fig. 3a den Vorgang des Ablösens der bereits verfestigten Schicht 4 von der Trennschicht;
Fig: 4: zur Erläuterung der Erfindung eine schematische Darstellung einer Vorrichtung für ein Rapid Prototyping Verfahren mit Hilfe der Photoverfestigung mit einer als Polymerisationswanne ausgeformten Trennschicht 1 und einer in z-Richtung verfahrbaren Objekthalterung 7;
Fig 5a und 5b: schematische Darstellungen zur Veranschaulichung des Vermeidens der Haftung der Folie bzw. Trennschicht 1 an der Bodenplatte 2;
Fig: 6: eine schematische Darstellung des Einspannens der elastischen Folie bzw. Trennschicht 1 auf drehbar gelagerte Rollen 8; und
Fig 7: eine schematische Darstellung einer als Polymerisationswanne ausgeformten Trennschicht 1.

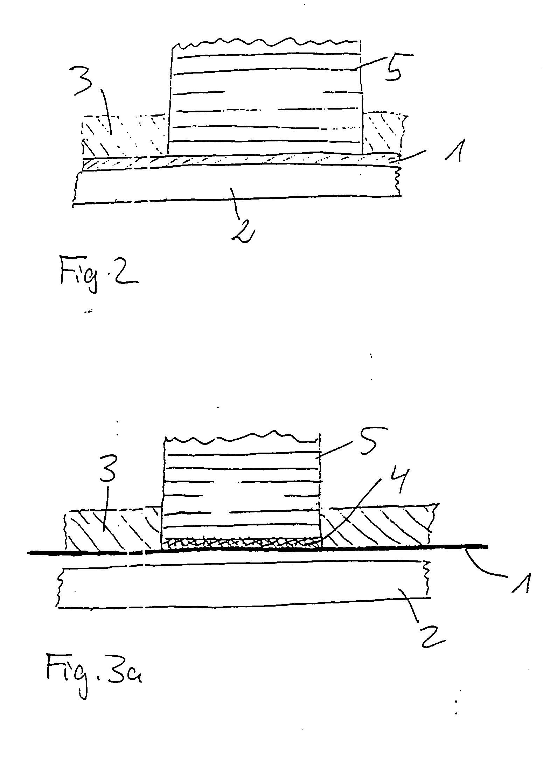

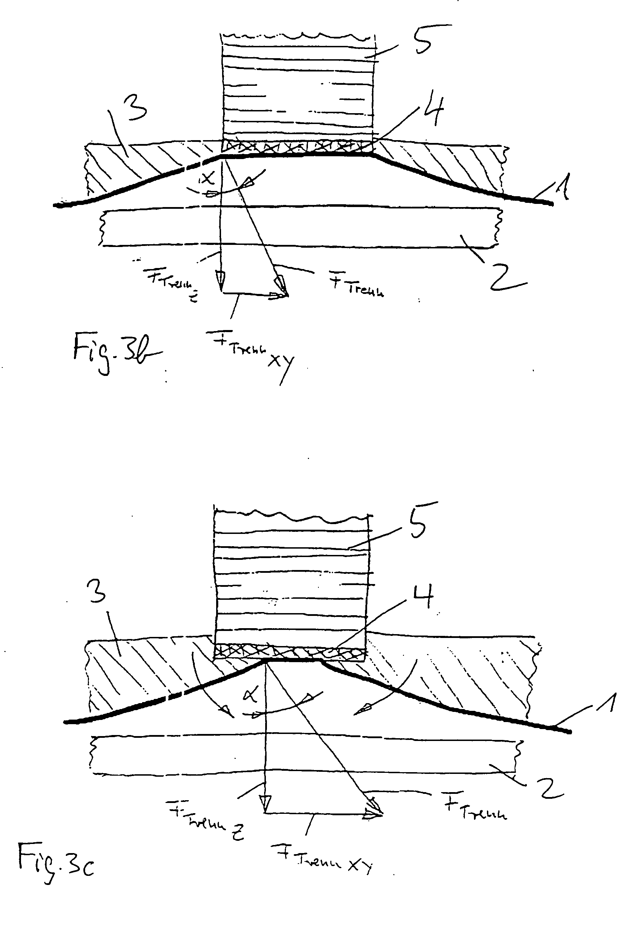

Als Trennschicht wird ein elastisches, transparentes/translucentes Material verwendet. Die Trennschicht kann bei einer Alternative, die zur Erläuterung der vorliegenden Erfindung dient,
A) zwischen Material und Bodenplatte in Form einer transparenten Folie angeordnet sein, in der Form, daß die Trennschicht keine Verbindung mit der transparenten Bodenplatte eingeht (Abb. 3a).
B) gemäß der vorliegenden Erfindung als direkte Beschichtung auf die transparente Bodenplatte aufgebracht werden, sodaß eine elastische Trennschicht auf der Bodenplatte entsteht (z.B. Silikon) (Abb. 2).

### Zu A): Folie als Trennschicht (zur Erläuterung der Erfindung)

Als Trennschicht wird eine (transparente) Folie gewählt, die zwischen der Bodenplatte und dem Photopolymer angeordnet ist (Abb. 3a).

Da die Folie nicht an der Bodenplatte haftet und so keine feste, unverformbare Einheit mit der Bodenplatte bildet, kann sie sich während des Trennvorgangs elastisch verformen, sodaß ein sogenannter "Schäl"- oder "Abzieh"-vorgang an der ausgehärteten Schicht hervorgerufen wird. Durch die elastische Verformung der Trennschicht bzw. den Abziehvorgang findet eine Verlagerung/Vektorzerlegung des Trennkraftvektors statt, die den Trennvorgang wesentlich erleichtert (siehe Abb. 3b-c). Dieser Vorgang kann durch das Anlegen eines Unterdruckes an den Zwischenraum zwischen Folie und Bodenplatte noch verstärkt werden und hat weiterhin den Vorteil, dass die ausgehärtete Schicht nur in dem Mass der folgenden Schichtdicke von der Bauebene weg bewegt werden muss.

Das Material der Folie kann je nach verwendetem Photopolymer für den Trennvorgang ausgewählt, bzw. optimiert werden.
Ein zusätzlicher "Antihaft"-Effekt und die leichte Inhibierung der radikalen Polymerisation bei Acrylat-Systemen kann z.B. durch den Einsatz von FEP-, PTFE- oder PFA-Folien zusätzlich hervorgerunfen werden.

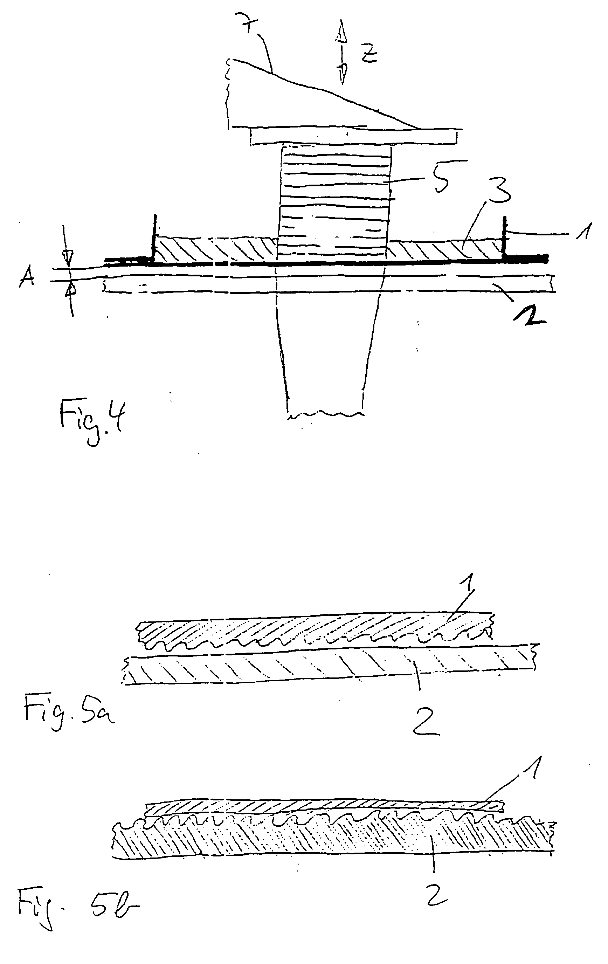

Die Folie kann bei Beschädigung oder Abnutzung unproblematisch ausgewechselt werden.
Zur Verbesserung der Wartung oder Reinigung des Gerätes kann die Folie in Verbindung mit einem zusätzlichen Rahmen aus dem selben oder anderem Material zu einer Art "Becken" ausgebildet werden (siehe Abb. 4), mit dem verbleibendes Restmaterial (Photopolymer) in ausgehärteter Form leicht entfernt und entsorgt werden kann.
Wird eine Folie aus einem hochelastischen Material wie z.B. Latex oder Silikonkautschuk verwendet, kann sich für den Trennvorgang zusätzlich ein Schereffekt zunutze gemacht werden. Dieser Effekt wird durch ein Dehnen der Folie in der Referenzenbene während des Trennvorganges hervorgerufen. Durch die Kombination von Schäl- und Schereffekt wird die Trennung erleichtert und der Trennweg beschränkt sich auf den Abstand der nächsten Schichtdicke.

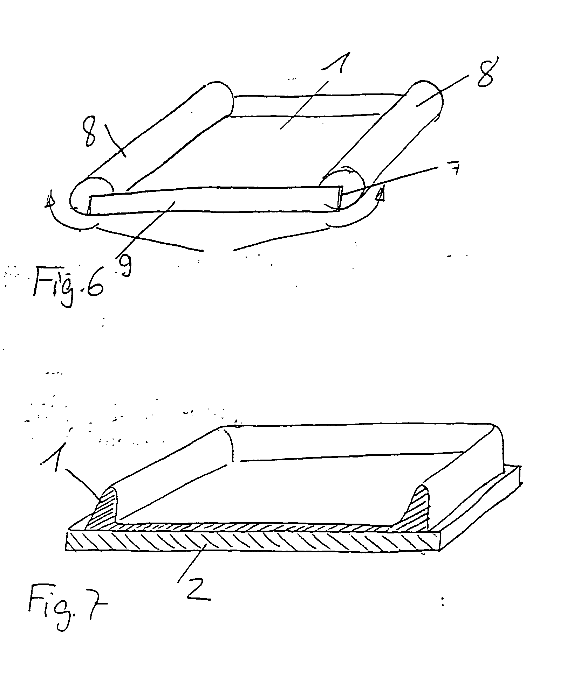

Die Anordnung in Abb. 4 zeigt zur Erläuterung der Erfindung eine Vorrichtung für eine Rapid Prototyping Verfahren mit Hilfe der Photoverfestigung, wobei sich in einem Becken mit einer transparenten Bodenplatte (z.B. aus Glas) und einer darüber gespannten ebenso transparenten Folie ein flüssiges Material (lichthärtender Kunststoff) befindet. Die Folie ist dabeo so im Randbereich des Beckens zwischen Rahmen und Bodenplatte eingespannt, dass ein Abstand zwischen Bodenplatte und Folie gewährleistet wird, welcher die Haftung der Folie im gespannten Zustand an der Bodenplatte verhindern würde und eine Luftzu- und -abfuhr zum/vom Zwischenraum zwischen Folie und Bodenplatte ermöglicht.
Über dem Becken befindet sich eine Trägerplatte die in vertikaler Richtung zur Bodenplatte durch eine Lineareinheit angehoben und abgesenkt werden kann.
Für die erste Schicht wird die Trägerplatte soweit in das Material eingetaucht, dass die Tiefenhärtung des selektiv belichteten Photopolymers (z.B. durch Multimedia Projektor oder Laser) eine feste Haftung an der Unterseite der Trägerplatte gewährleistet.
Wird die Trägerplatte mit samt der ausgehärteten Schicht(en) angehoben, löst sich die Folie von der Unterseite der ausgehärteten Materialschicht durch eine Art Schäl-/Abziehvorgang, wenn die Kraftvektoren zwischen ausgehärteter Materialschicht und Folie zur Trennung eine ausreichend große horizontale Komponente (F _{Trenn XY} ) aufweisen (Abb. 3a-c).
Die horizontale Kraftkomponente (F _{Trenn XY} ) kommt dadurch zustande, dass sich beim Anheben des Objektes die Folie zwischen Rahmeneinspannung und dem an der ausgehärteten Materialschicht haftenden Bereich elastisch verformt bzw. spannt und sich mit dem verändernden Anstellwinkel α der Folie zur Materialschicht auch die Kraftangriffsrichtung aus der senkrechten heraus bewegt.
Die Trägerplatte muß dabei soweit angehoben werden, daß sich die Folie vollständig von der ausgehärteten Fläche trennen und durch anschließende Relaxation in ihren Ursprungszustand zurückkehren kann.
Frisches, flüssiges Material für die folgende auszuhärtende Schicht wird automatisch durch den wachsenden, keilförmigen Spalt zwischen Folie und ausgehärteter Schicht während des Trennvorgangs mitgenommen.
Eine Alternative für die Unterbindung der Haftung der Folie an der Bodenplatte und eine Gewährleistung der Luftzufuhr und somit Verhinderung des Ansaugens der Folie an der Ebene/Bodenplatte kann durch eine gezielt hervorgerufene Oberflächenrauhigkeit bzw. Strukturierung
a) an der Unterseite der Folie (Abb. 5a)durch Mikro/Nanostrukturierung oder
b) an der zur Folie ausgerichteten Seite der Bodenplatte (Abb. 5b), z.B. durch Anätzen der Glasoberfläche oder entsprechend rauhe Beschichtungen (ITO-Beschichtung)
umgesetzt werden.
Erreicht die Folie z.B. eine ausreichende Eigensteifigkeit oder ist ausreichend gespannt, kann u.U. auf die transparente Referenzplatte ganz verzichtet werden.
In einer weiteren Ausführungsform sind Folie und transparente Referenzplatte so angeordnet, daß zwischen Platte und Folie ein flache Kammer ausgebildet ist, die mit einem flüssigen oder gasförmigen Medium gefüllt ist . An die Kammer kann ein Unterdruck angelegt werden, um den Trenn-/Abschälvorgang zu beschleunigen und das Anheben/Absenken der Trägerplatte samt Objekt beim Trennvorgang auf ein Minimum, nämlich die folgende Schichtdicke zu reduzieren.
Der Unterdruck wird dann angelegt, wenn das Objekt auf die nächste Schichtdicke angehoben ist, um die elastische Verformung der Folie zu forcieren und den Anstellwinkel α der Folie im Randbereich außerhalb der Kontur der anhaftenden ausgehärteten Fläche bis zum Einsetzen des Abschälvorgangs zu vergrößern.
Der Unterdruck wird solange angelegt, bis sich die Folie komplett von der ausgehärteten Schicht abgelöst und relaxiert hat.
Um das Problem der plastischen Verformung und des Kriechens der Folie im Dauerbetrieb zu vermeiden, kann eine hoch elastische Folie eingesetzt werden, die während des Trennvorganges gedehnt wird. Dazu wird die Folie z.B. über zwei gegenüberliegende Rollen eingespannt (siehe Abb. 6) und durch beidseitig "Aufrollen" gedehnt und anschließendes "Abrollen" wieder in den Urzustand zurückgeführt. Durch die so gleichmäßige Dehnung der Folie in entgegengesetzte Richtungen verjungt sich die Foliendicke temporär und zusätliche Scheerkräfte treten auf.
Die Einspannung der Folie zwischen den in einem Rahmen gehaltenen Rollen kann dabei so gestaltet sein, dass ein Becken entsteht, in dem sich das flüssige Photopolymer befindet (siehe Abb. 6).
Eine erfindungsgemäße Alternative zur Folie bietet das Auftragen einer optisch transparenten Silikonschicht auf der zum Photopolymer orientierten Glasplatte. Beim Trennvorgang verhält sich die dem Photopolymer zugewandte Silikonschicht vom Prinzip her ähnlich der Folie, d.h. in der gesamten Silikonschicht findet eine elastische Verformung statt und die inneren Spannungen in der Silikonschicht führen dazu, daß sich die an der ausgehärteten Materialschicht haftenden Bereiche der Silikonschicht abschälen.
Wichtig ist hierbei, daß eine gute Haftung der Silikonschicht an der Bodenplatte (Glasplatte) gewährleistet ist, bzw. die Haftung zwischen Silikonschicht und Bodenplatte um ein Vielfaches größer ist als die Haftung zwischen Silikonschicht und ausgehärtetem Material.
Durch das Ausformen eines Rahmens aus dem selben Silikonmaterial ensteht ebenfalls ein Becken zur Aufnahme des flüssigen Photopolymers (siehe Abb. 7).
Die oben beschriebenen Verfahren mit Folie oder Silikon sind nicht auf die oben beschriebene Anordnung beschränkt. Ihr Einsatz ist auch in den skizzierten Varianten, siehe Abb. 1a-c.denkbar, sowie z.B. in der Anordnung aus der Gebrauchsmusterschrift DE G 93 19 405.6 "Vorrichtung zur Herstellung eines dreidimensionalen Objekts (Modells) nach dem Prinzip der Photoverfestigung".

## Patentansprüche

1. Vorrichtung zur Trennung einer, auf einer planen, als Referenz dienenden Ebene (2) ausgehärteten Materialschicht mit Hilfe einer Trennschicht (1), die zwischen Ebene und Materialschicht angeordnet ist und als direkte Beschichtung auf die Ebene (2) aufgebracht ist, so dass die elastische Trennschicht (1) auf der planen Ebene (2) gebildet ist, wobei die Referenzebene (2) als transparente Platte ausgebildet ist und die Trennschicht (1) ebenfalls transparent ist, **dadurch gekennzeichnet, dass** beim Trennvorgang die Trennschicht durch Anhebung einer Trägerplatte (7) mitsamt der ausgehärteten Materialschicht elastisch verformt wird, bis ein Schälvorgang vom ausgehärteten Material in Kraft gesetzt wird und, daß nach Anhebung der Trägerplatte (7) mitsamt der ausgehärteten Materialschicht (4) die Trennschicht nach vollständiger Ablösung und durch Relaxation in ihren Ursprungszustand zurückkehrt.

2. Vorrichtung nach Anspruch 1,
**dadurch gekennzeichnet, dass** die Haftung der Trennschicht (1) an der Ebene (2) um ein Vielfaches größer ist als die Haftung der Schicht (1) an der ausgehärteten Materialschicht (4).

3. Vorrichtung nach Anspruch 1,
**dadurch gekennzeichnet, dass** die Bauebene auf der Seite der Trennschicht (1) seitlich durch einen Rahmen begrenzt ist und so eine Art Aufnahmebecken für das Material gebildet wird.

4. Vorrichtung nach Anspruch 3,
**dadurch gekennzeichnet, dass** der seitliche Rahmen aus demselben Material wie die Trennschicht (1) ausgebildet ist.

5. Vorrichtung nach einem der Ansprüche 1 - 4,
**dadurch gekennzeichnet, dass** das flexible, elastische Material Silikon ist.

6. Verfahren zur Trennung einer, auf einer planen, als Referenz dienenden Ebene (2) ausgehärteten Materialschicht (4), **dadurch gekennzeichnet, daß** eine Vorrichtung nach einem der Ansprüche 1 bis 5 verwendet wird.

## Claims

1. Apparatus for the separation of a material layer, hardened on a flat plane (2) serving as a reference, by means of a separating layer (1) arranged between plane and material layer and applied to the plane (2) as direct coating, so that the elastic separating layer (1) is formed on the flat plane (2), wherein the reference plane (2) is designed as a transparent plate and the separating layer (1) is also transparent, **characterised in that** by lifting a carrier plate (7) together with the hardened material layer, the separating layer (1) is elastically deformed during a separation process until a process of peeling off the hardened material is set in action, and that after lifting the carrier plate (7) together with the hardened material layer (4), the separating layer after complete detachment and by relaxation returns to its original state.

2. Apparatus according to claim 1, **characterised in that** adhesion of the separating layer (1) to the plane (2) is greater by a multitude than adhesion of the layer (1) to the hardened material layer (4).

3. Apparatus according to claim 1, **characterised in that** the construction plane on a side of the separating layer (1) is laterally defined by a frame and thus a kind of holding basin for the material is formed.

4. Apparatus according to claim 3, **characterised in that** the lateral frame is formed from the same material as the separating layer (1).

5. Apparatus according to any one of claims 1 to 4, **characterised in that** the flexible, elastic material is silicone.

6. Process for the separation of a material layer (4) hardened on a flat plane (2) serving as a reference, **characterized in that** an apparatus according to any one of claims 1 to 5 is used.

## Revendications

1. Dispositif pour la séparation d'une couche de matériau durcie sur un plan (2) plat servant de référence, au moyen d'une couche de séparation (1) disposée entre le plan et la couche de matériau et appliquée en tant que revêtement direct sur le plan (2), de telle manière que la couche de séparation (1) élastique est formée sur le plan (2) plat, le plan de référence (2) étant réalisé sous forme de plaque transparente et la couche de séparation (1) étant également transparente,
**caractérisé en ce que**, lors du processus de séparation, la couche de séparation est élastiquement déformée par soulèvement d'une plaque support (7) avec la couche de matériau durcie, jusqu'à ce qu'un processus de pelage du matériau durci soit activé, et **en ce qu'**après soulèvement de la plaque support (7) avec la couche de matériau (4) durcie, la couche de séparation retourne dans son état initial après décollement complet et par relâchement.

2. Dispositif selon la revendication 1,
**caractérisé en ce que** l'adhérence de la couche de séparation (1) contre le plan (2) est plusieurs fois supérieure à l'adhérence de la couche (1) contre la couche de matériau (4) durcie.

3. Dispositif selon la revendication 1,
**caractérisé en ce que** le plan de construction est délimité latéralement par un cadre sur le côté de la couche de séparation (1), une sorte de godet de réception étant ainsi formée pour le matériau.

4. Dispositif selon la revendication 3,
**caractérisé en ce que** le cadre latéral est constitué du même matériau que la couche de séparation (1).

5. Dispositif selon l'une des revendications 1 à 4,
**caractérisé en ce que** le matériau élastique et flexible est la silicone.

6. Procédé de séparation d'une couche de matériau (4) durcie sur un plan (2) plat servant de référence,
**caractérisé en ce qu'**un dispositif selon l'une des revendications 1 à 5 est utilisé.
